# EUROPÄISCHE PATENTSCHRIFT

(11) **EP 4 722 635 B1**
(45) Veröffentlichungstag und Bekanntmachung des Hinweises auf die Patenterteilung: **18.11.2026**
(21) Anmeldenummer: 25207053.7
(22) Anmeldetag: 06.10.2025
(51) Int. Cl.: G01B 5/00, G01B 11/06

(54) **VORRICHTUNG FÜR EINEN PROBENKÖRPER, SYSTEM UND VERWENDUNG**
DEVICE FOR A TEST SPECIMEN, SYSTEM, AND USE
DISPOSITIF POUR UN ÉCHANTILLON, SYSTÈME ET UTILISATION

(30) Priorität: 07.10.2024 DE 102024128828
(43) Veröffentlichungstag der Anmeldung: 08.04.2026
(73) Patentinhaber: Jamil Orfali Giant Labs GmbH, 12555 Berlin (DE)
(72) Erfinder: Mailahn, Uwe, 10319 Berlin (DE); Pohlmann, Ludwig, 12435 Berlin (DE); Orfali, Jamil, 16552 Schildow (DE)
(74) Vertreter: Hamm&Wittkopp Patentanwälte PartmbB

(56) Entgegenhaltungen:
- CN-B- 117 516 408
- DE-A1- 102017 108 868

## Beschreibung

Die vorliegende Erfindung betrifft eine Vorrichtung zur Aufnahme eines Probenkörpers, wobei die Vorrichtung eine lineare Verschiebeeinheit und eine darauf gelagerte Probenaufnahmeeinheit umfasst. Die Probenaufnahmeeinheit umfasst eine Trägersäule, welche auf einer Bodenplatte angeordnet ist, sowie eine erste und eine zweite Trägerplatte. An der Trägersäule ist ein Querträger angeordnet, an dem ein Haltebügel angeordnet ist. Die Probenaufnahmeeinheit umfasst weiter eine Rotationseinheit mit wenigstens zwei Rotationswellen, wobei die Rotationseinheit dazu eingerichtet ist, einen beschichteten Probenkörper aufzunehmen und diesen zu rotieren, so dass die Schichtdicke der Beschichtung des Probenkörpers mittels einer Lichtquelle ermittelt werden kann.

Die erfindungsgemäße Vorrichtung ist dazu eingerichtet, beschichtete Probenkörper aufzunehmen und so zu positionieren, dass eine ortsfeste Lichtquelle die Schichtdicke des beschichteten Probenkörpers messen bzw. ermitteln kann. Weiterhin umfasst die vorliegende Erfindung ein System, welches eine erfindungsgemäße Vorrichtung sowie eine Lichtquelle umfasst. Ferner umfasst ist die Verwendung einer Vorrichtung oder eines Systems zur Schichtdickenmessung eines Probenkörpers.

### Stand der Technik

Es ist aus dem Stand der Technik bekannt, dass Probenkörper, beispielsweise Spritzen und Vials, beschichtet sind, insbesondere mit einer Silikonschicht, die üblicherweise im Inneren des Probenkörpers aufgebracht ist. Solche Beschichtungen haben zum einen die Aufgabe, die Reibung zwischen dem Spritzenkörper und dem Spritzenstempel zu verringern. Zum anderen ermöglichen solche Beschichtungen innerhalb solcher Probenkörper, dass im Probenkörper befindliche Lösungen komplett, beispielsweise durch eine Spritze, entnommen werden können, da die Beschichtung dafür sorgt, dass die Haftung von den Lösungen an den Wänden der Vials reduziert wird.

Für die Qualitätssicherung und auch für die Ermittlung der Lagerstabilität von gebrauchsfertigen Lösungen in Probenkörpern ist es notwendig, dass die Schichtdicke, mit der der Probenkörper im Inneren des Probenkörpers beschichtet ist, bestimmt wird. Üblicherweise werden Probenkörper mit einer Silikonschicht versehen. Silikonschichten haben den Vorteil, gegenüber den meisten herkömmlichen Lösungsmitteln und gegenüber vielen pharmazeutischen Wirkstoffen inert zu sein. Allerdings können die Silikonschichten nach einer gewissen Lagerzeit zumindest teilweise in Lösung gehen oder sich anderweitig vom Probenkörper lösen. Es ist für eine gleichbleibende Qualität sehr wichtig, dass die Probenkörper eine bestimmte Schichtdicke aufweisen. Die Schichtdicke wird herkömmlicherweise mittels einer Schichtdickenmessung der Probenkörper bestimmt. Hierzu werden unter anderem Laser (monochromatisches Licht) eingesetzt, welche dann den Probenkörper messen. Anhand der Reflektion oder Absorption des emittierten Lichts kann mittels herkömmlicher, aus dem Stand der Technik bekannter Methoden, die Schichtdicke des Probenkörpers bestimmt werden. Dafür ist zumeist die Lichtquelle mit einer Auswerteeinheit gekoppelt. Auswerteeinheiten können beispielsweise Computer, Laptops, Tablets etc. mit darauf installierter Software sein, mit denen die Messdaten ausgewertet werden können um die Schichtdicke zu bestimmen.

Bei den aus dem Stand der Technik bekannten Systemen zum Bestimmen der Schichtdicke eines Probenkörpers ist die Lichtquelle fest positioniert. Dies bedeutet, dass der Probenkörper bewegt wird, wobei die Lichtquelle immer nur einen bestimmten Bereich auf einer Mantelfläche des Probenkörpers misst. Mittels des monochromatischen Lichts werden dann durch Bewegungen des Probenkörpers nach und nach Punkte von einigen Mikrometern auf der Mantelfläche des Probenkörpers bestrahlt und gemessen, und aus den Messergebnissen wird anschließend die Schichtdicke des Probenkörpers bestimmt. Um genaue Messergebnisse zu erhalten war es bisher notwendig, die Auswerteeinheit, mit der die Messergebnisse ausgewertet werden, mehrfach neu einzustellen, um genaue Ergebnisse zu erhalten, denn beim Bewegen des Probenkörpers auf der Probenkörperaufnahmevorrichtung musste bisher häufig eine erneute Nullmessung zum Justieren durchgeführt werden, um genaue Messergebnisse zu erhalten. Dies ist jedoch äußerst zeitaufwendig, mit hohen Kosten verbunden und somit unerwünscht.

DE 10 2017 108 868 A1 offenbart eine Vorrichtung zur Aufnahme eines zylindrischen Probenkörpers mit einer auf einer linearen Verschiebeeinheit gelagerten Probeaufnahmeeinheit mit einer Bodenplatte, und einer auf der Bodenplatte angeordneten Rotationseinheit mit zwei Rotationswellen, um den Probenkörper aufzunehmen und zu drehen.

Es war daher eine Aufgabe der vorliegenden Erfindung, die aus dem Stand der Technik bekannten Probleme zu umgehen. Insbesondere war es eine Aufgabe, einen herkömmlichen Aufbau zur Schichtdickenbestimmung von Probenkörpern so zu verbessern, dass die Schichtdicke eines Probenkörpers bestimmt werden kann, ohne dass beim Bewegen des Probenkörpers auf der Probenkörperaufnahmevorrichtung eine erneute Nullmessung durchgeführt werden muss.

Diese und weitere Probleme des Standes der Technik werden mit den Gegenständen der unabhängigen Patentansprüche gelöst. Bevorzugte Ausgestaltungen sind Teil der abhängigen Patentansprüche oder werden nachfolgend genauer beschrieben.

### Beschreibung der Erfindung

Erfindungsgemäß wird eine Vorrichtung zur Aufnahme eines Probenkörpers vorgeschlagen, der zumindest eine lineare Verschiebeeinheit und eine Probenaufnahmeeinheit aufweist. Die Probenaufnahmeeinheit umfasst weiterhin zumindest eine Bodenplatte, eine erste Trägerplatte und eine darauf gelagerte zweite Trägerplatte, eine Trägersäule und einen Querträger, eine Rotationseinheit und einen Haltebügel. Die Probenaufnahmeeinheit ist auf der linearen Verschiebeeinheit verschiebbar gelagert. Die Trägersäule ist im Wesentlichen orthogonal auf der Bodenplatte angeordnet. Die erste Trägerplatte ist zumindest teilweise an der Trägersäule verschiebbar gelagert. Der Querträger ist an der Trägersäule angeordnet, und an dem Querträger ist der Haltebügel angeordnet. Die Rotationseinheit ist auf der zweiten Trägerplatte angeordnet und umfasst zwei Rotationswellen. Die Rotationseinheit ist dazu eingerichtet, einen Probenkörper aufzunehmen, und der Haltebügel ist dazu eingerichtet, einen Probenkörper zumindest teilweise auf der Rotationseinheit zu positionieren und zu fixieren, so dass der Probenkörper von einer ortsfesten Lichtquelle gemessen, d.h., dass die Schichtdicke bestimmt werden kann.

Überraschenderweise wurde gefunden, dass mit einer erfindungsgemäßen Vorrichtung darauf angeordnete Probenkörper einfach und ohne großen Zeitaufwand hinsichtlich ihrer Schichtdicke gemessen werden können, ohne dass hierfür das Messsystem, welches neben der Vorrichtung noch eine ortsfeste Lichtquelle und eine Auswerteeinheit umfasst, stets neu justiert bzw. eingestellt werden muss.

Weiterhin umfasst die vorliegende Erfindung ein System, das eine Lichtquelle und eine erfindungsgemäße Vorrichtung umfasst, wobei die Lichtquelle so ausgestaltet ist, die Schichtdicke eines Probenkörpers, insbesondere eine Silikonschicht, zu bestimmen.

Ebenfalls umfasst die vorliegende Erfindung die Verwendung einer erfindungsgemäßen Vorrichtung und eines erfindungsgemäßen Systems bei der Schichtdickenmessung eines Probenkörpers.

### Detaillierte Beschreibung der Erfindung

Die erfindungsgemäße Vorrichtung zur Aufnahme eines Probenkörpers weist zumindest eine lineare Verschiebeeinheit und eine Probenaufnahmeeinheit auf. Die Probenaufnahmeeinheit umfasst eine Bodenplatte, eine erste und eine zweite Trägerplatte, eine Trägersäule, einen Querträger, eine Rotationseinheit und einen Haltebügel. Die Probenaufnahmeeinheit ist auf der linearen Verschiebeeinheit gelagert. Die lineare Verschiebeeinheit weist ein erstes Ende und ein gegenüberliegendes zweites Ende auf. Zwischen dem ersten und zweiten Ende erstreckt sich eine erste Achse, entlang welcher die Probenaufnahmeeinheit verschoben werden kann.

In einer bevorzugten Ausgestaltung weist die lineare Verschiebeeinheit Laufschienen auf, auf welchen die Probenaufnahmeeinheit gelagert ist. Es kann bevorzugt sein, dass die lineare Verschiebeeinheit einen Motor aufweist, der dazu ausgestaltet ist, die Probenaufnahmeeinheit entlang der ersten Achse zu bewegen. Der Motor kann beispielsweise ein Elektromotor sein und ist bevorzugt am ersten oder zweiten Ende der linearen Verschiebeeinheit angeordnet.

Die Probenaufnahmeeinheit umfasst ferner eine Trägersäule, welche im Wesentlichen orthogonal auf der Bodenplatte der Probenaufnahmeeinheit angeordnet ist. In einer bevorzugten Ausgestaltung weist die Probenaufnahmeeinheit wenigstens zwei Trägersäulen, mehr bevorzugt zumindest vier Trägersäulen auf. In dieser Ausgestaltung ist weiter bevorzugt die Bodenplatte als Rechteck ausgestaltet, und die vier Trägersäulen sind jeweils in den vier Ecken der rechteckigen Bodenplatte angeordnet.

Erfindungsgemäß weist die Probenaufnahmeeinheit eine erste und eine zweite Trägerplatte auf, wobei die zweite Trägerplatte auf der ersten Trägerplatte gelagert ist. Die erste Trägerplatte ist zumindest teilweise an der Trägersäule gelagert. In einer bevorzugten Ausgestaltung, in welcher die Probenaufnahmeeinheit vier Trägersäulen umfasst, ist die erste Trägerplatte zumindest teilweise an den vier Trägersäulen gelagert.

Die Probenaufnahmeeinheit umfasst einen Querträger, der an zumindest einer Trägersäule angeordnet ist. Insbesondere ist der Querträger orthogonal an der Trägersäule angeordnet. In einer bevorzugten Ausgestaltung, in der die erfindungsgemäße Vorrichtung zwei Trägersäulen umfasst, ist der Querträger zwischen den zwei Trägersäulen angeordnet und steht mit beiden Trägersäulen in Kontakt. In einer weiteren bevorzugten Ausgestaltung, in welcher die Vorrichtung vier Trägersäulen umfasst, weist die Probenaufnahmeeinheit vorzugsweise zwei Querträger auf, wobei weiter bevorzugt beide Querträger parallel zueinander angeordnet sind und beide Querträger mit jeweils zwei Trägersäulen in Verbindung stehen.

Die erste Trägerplatte ist entlang einer zweiten Achse verschiebbar. Die zweite Achse verläuft orthogonal zur ersten Achse und erstreckt sich von der Bodenplatte in Richtung des Querträgers. Das Verschieben entlang der zweiten Achse kann beispielsweise händisch erfolgen. Hierzu wird die erste Trägerplatte insbesondere durch Ausüben eines Drucks entlang der zweiten Achse bewegt. Es ist ebenfalls möglich, dass das Verschieben der ersten Trägerplatte mittels eines Motors erfolgt. Die zweite Trägerplatte ist auf der ersten Trägerplatte gelagert. Bei einer Bewegung der ersten Trägerplatte wird somit die zweite Trägerplatte mitbewegt.

In einer bevorzugten Ausgestaltung ist zwischen der ersten Trägerplatte und der zweiten Trägerplatte ein Lager, insbesondere ein Kugellager, angeordnet. In dieser Ausgestaltung kann es weiter bevorzugt sein, dass die zweite Trägerplatte entlang einer dritten Achse, welche sich orthogonal zu der ersten Achse und der zweiten Achse erstreckt, verschiebbar angeordnet ist. In dieser bevorzugten Ausgestaltung ist die erste Trägerplatte zumindest teilweise an den Trägersäulen angeordnet, wobei vorzugsweise die zweite Trägerplatte die Trägersäulen nicht berührt und zwischen diesen entlang der dritten Achse verschiebbar angeordnet ist. Ebenfalls kann es in einer weiter bevorzugten Ausgestaltung vorgesehen sein, dass die zweite Trägerplatte ebenfalls entlang der ersten Achse, welche sich vom ersten Ende zum zweiten Ende der linearen Verschiebeeinheit erstreckt, verschiebbar ist.

Die Probenaufnahmeeinheit umfasst ferner einen Haltebügel, der an dem Querträger angeordnet ist. Insbesondere ist der Haltebügel orthogonal am Querträger angeordnet. Der Haltebügel ist dazu eingerichtet, einen Probenkörper zumindest teilweise auf der zur Probenaufnahmeeinheit gehörenden Rotationseinheit zu fixieren bzw. positionieren. In einer bevorzugten Ausgestaltung umfasst die Probenaufnahmeeinheit der erfindungsgemäßen Vorrichtung zwei Haltebügel. In einer weiteren bevorzugten Ausgestaltung, in der die Probenaufnahmeeinheit wenigstens zwei Trägersäulen umfasst, bei denen beide Trägersäulen über einen Querträger miteinander verbunden sind, ist der Haltebügel entlang der ersten Achse verschiebbar. Dies kann in einer weiteren bevorzugten Ausgestaltung mittels einer an dem Querträger angeordneten Führungsbahn erfolgen, welche es ermöglicht, den Haltebügel entlang der ersten Achse zu bewegen. Erste, zweite und dritte Achse im Sinne der vorliegenden Erfindung meinen die drei Achsen eines kartesischen Koordinatensystems, die orthogonal aufeinander stehen, analog den X-, Y- und Z-Achsen eines kartesischen Koordinatensystems.

In einer weiteren bevorzugten Ausgestaltung, in der die Probenaufnahmeeinheit wenigstens vier Trägersäulen umfasst, die in den vier Ecken einer rechteckigen Bodenplatte angeordnet sind, und bei denen jeweils zwei Trägersäulen über jeweils einen Querträger miteinander verbunden sind, und wobei die Querträger parallel zueinander verlaufen, ist der Haltebügel, weiter bevorzugt wenigstens zwei Haltebügel, jeweils mit beiden Querträgern in Kontakt. Es kann ebenfalls bevorzugt sein, dass wenigstens einer der Haltebügel entlang der ersten Achse beweglich angeordnet ist, zum Beispiel entlang einer am Querträger angeordneten Führungsbahn. Ebenfalls kann es bevorzugt sein, dass beide Haltebügel entlang der ersten Achse beweglich sind.

Die Probenaufnahmeeinheit der erfindungsgemäßen Vorrichtung umfasst eine Rotationseinheit, die auf der zweiten Trägerplatte angeordnet ist. Die Rotationseinheit umfasst zumindest zwei Rotationswellen und ist dazu eingerichtet, einen beschichteten Probenkörper aufzunehmen, so dass eine ortsfeste Lichtquelle den Probenkörper messen beziehungsweise bestrahlen kann. Die Rotationswellen sind insbesondere so ausgestaltet, dass diese parallel zueinander verlaufen und ein Probenkörper auf ihnen aufliegen kann. Die Rotationswellen können in einer bevorzugten Ausgestaltung mittels eines Motors jeweils im Uhrzeigersinn oder auch im Gegenuhrzeigersinn gedreht werden. Ein Probenkörper im Sinne der vorliegenden Erfindung ist ein länglicher Körper mit einem ersten und gegenüberliegendem zweiten Ende, zwischen denen sich eine Rotationsachse erstreckt. Durch das Drehen der Rotationswellen kann ein auf der Rotationseinheit angeordneter Probenkörper mittels einer Lichtquelle bezüglich der Schichtdicke untersucht werden. Beim Bestrahlen des Probenkörpers mittels einer ortsfesten Lichtquelle kann ein auf der Rotationseinheit angeordneter Probenkörper durch Drehen der Rotationswellen im Uhr- bzw. Gegenuhrzeigersinn entlang seiner Rotationsachse rotiert werden und so der gesamte Umfang des Probenkörper vermessen werden. Durch Bewegen des der Probenaufnahmeeinheit entlang der ersten Achse kann so die gesamte Mantelfläche des Probenkörpers gemessen werden. Dabei ist es möglich, dass zunächst der Probenkörper rotiert wird und anschließend eine Bewegung der Probenaufnahmeeinheit entlang der ersten Achse erfolgt, oder aber zunächst der Probenkörper von seinem ersten Ende zu seinem zweiten Ende mittels der Lichtquelle gemessen wird und anschließend eine Rotation um die Rotationsachse des Probenkörpers erfolgt.

In einer bevorzugten Ausgestaltung weist die Trägersäule bzw. weisen die Trägersäulen eine Führungsschiene auf. Es ist bevorzugt, dass sämtliche Trägersäulen eine Führungsschiene aufweisen. Die erste Trägerplatte ist bevorzugt an der Führungsschiene gelagert, insbesondere ist es bevorzugt, dass die erste Trägerplatte an den Führungsschienen aller Trägersäulen gelagert ist, wobei eine Probenaufnahmeeinheit mit insgesamt vier Trägersäulen bevorzugt ist. Die erste Trägerplatte kann entlang der zweiten Achse entlang der Führungsschienen verschoben werden.

In einer bevorzugten Ausgestaltung weist der Querträger eine Führungsbahn auf, vorzugsweise umfasst die Vorrichtung zwei parallel zueinander angeordnete Querträger mit jeweils einer Führungsbahn. Die Führungsbahn ist dazu eingerichtet, dass der Haltebügel an der Führungsbahn angeordnet werden kann, und dass der Haltebügel entlang der Führungsbahn bewegbar ist. Der Haltebügel ist dazu eingerichtet, einen Probenkörper auf der Rotationseinheit zu fixieren. Der Haltebügel kann unterschiedliche Ausgestaltungen aufweisen, insbesondere abhängig von der Form des Probenkörpers. Es kann bevorzugt sein, dass der Haltebügel zumindest teilweise beschichtet ist, beispielsweise mit einer Teflonschicht. Die Teflonschicht kann verhindern, dass Perforationen auf der Mantelfläche eines Probenkörpers beim Fixieren bzw. Positionieren auf der Rotationseinheit auftreten. Ebenfalls kann so verhindert werden, dass bei zu starkem Fixieren des Probenkörpers zwischen dem Haltebügel und der Rotationseinheit der Probenkörper nicht mehr von der Rotationseinheit gedreht werden kann.

In einer bevorzugten Ausgestaltung ist auf jeder der zwei Rotationswellen zumindest eine Auflagerolle angeordnet. Weiter bevorzugt ist die Auflagerolle entlang der ersten Achse verschiebbar. Es kann weiter bevorzugt sein, dass auf jeder der zwei Rotationswellen wenigstens zwei Auflagerollen angeordnet sind. Die Auflagerollen sind dazu eingerichtet, dass ein Probenkörper auf diesen aufliegt. Durch das Drehen der Rotationswellen im Uhrzeigersinn bzw. im Gegenuhrzeigersinn werden die Auflagerollen ebenfalls im Uhrzeigersinn bzw. im Gegenuhrzeigersinn gedreht. Durch das Drehen der Rotationswellen wird in einem anwendungsgemäßen Zustand ein auf der Rotationseinheit befindlicher Probenkörper um seine Rotationsachse gedreht und kann mittels einer Lichtquelle bezüglich der Schichtdicke gemessen werden. Es kann weiter bevorzugt sein, dass Auflageflächen auf den Auflagerollen angeordnet sind, insbesondere in Form von Gummiringen, welche die Auflagerollen zumindest teilweise umlaufen. Diese haben den Vorteil, dass ein ungewolltes Verschieben des Probenkörpers, insbesondere in Richtung der ersten Achse, beim Drehen der Rotationswellen verhindert wird. Es ist bevorzugt, dass die Auflagerollen auf den Rotationswellen entlang der ersten Achse verschiebbar sind.

In einer bevorzugten Ausgestaltung weist die Rotationseinheit eine Motoreinheit auf, welche dazu ausgelegt ist, beide Rotationswellen zu rotieren, so dass beide Rotationswellen im Uhrzeigersinn oder im Gegenuhrzeigersinn rotieren. Die Motoreinheit, welche die Rotationseinheit antreibt, ist beispielsweise ein Elektromotor.

In einer weiteren bevorzugten Ausgestaltung umfasst die Probenaufnahmeeinheit zusätzlich eine Federrolle, insbesondere bevorzugt wenigstens zwei Federrollen. Die Federrolle ist in einer Ausgestaltung an einer Trägersäule angeordnet und weist ein Federband auf, welches an der ersten Trägerplatte angeordnet ist. Die erste Trägerplatte ist entlang der zweiten Achse verschiebbar; durch die Federrolle und das Federband, welches die Federrolle mit der ersten Trägerplatte verbindet, lässt sich der Anpressdruck der ersten Trägerplatte gegen den Haltebügel genauer kontrollieren. In einem anwendungsgemäßen Zustand wird die erste Trägerplatte, auf der die zweite Trägerplatte gelagert ist, und auf der wiederum die Rotationseinheit angeordnet ist, in Richtung der Haltebügel verschoben. Die Haltebügel sind dazu eingerichtet, einen Probenkörper auf der Rotationseinheit zu fixieren, so dass eine Lichtquelle die Schichtdicke eines Probenkörpers messen kann. Die Federrolle und das Federband, welches die Federrolle mit der ersten Trägerplatte verbindet, reguliert den Anpressdruck an die Haltebügel und verhindert, dass die Haltebügel zu fest auf dem Probenkörper aufliegen beziehungsweise, dass die Rotationseinheit den Probenkörper zu fest gegen den Haltebügel drückt.

Die erfindungsgemäße Vorrichtung ermöglicht es, mit einem herkömmlichen Setup umfassend eine Lichtquelle und eine Auswerteeinheit die Schichtdicke beschichteter Probenkörper schnell und einfach mit herkömmlichen Mitteln zu bestimmen. Insbesondere ermöglicht die erfindungsgemäße Vorrichtung, einen Probenkörper so zu positionieren, dass dieser ohne mehrfache Nullmessung bzw. Nachjustierung der Auswerteeinheit gemessen werden kann.

Ebenfalls umfasst von der vorliegenden Erfindung ist ein System, welches zumindest eine erfindungsgemäße Vorrichtung sowie eine Lichtquelle, vorzugsweise einen Laser, umfasst. Der Laser ist dazu ausgerichtet, die Schichtdicke einer in einem Probenkörper befindlichen Schicht zu messen. In einer weiteren bevorzugten Ausgestaltung umfasst das System zusätzlich eine Auswerteeinheit, wobei die Auswerteeinheit insbesondere ein Computer ist, der dazu eingerichtet ist, die Messdaten der Lichtquelle auszuwerten. In noch einer weiteren bevorzugten Ausgestaltung umfasst das System den Probenkörper selbst, wobei der Probenkörper insbesondere eine beschichtete Spritze oder ein beschichtetes Vial ist.

Weiterhin umfasst von der vorliegenden Erfindung ist die Verwendung einer erfindungsgemäßen Vorrichtung bzw. eines erfindungsgemäßen Systems für die Schichtdickenmessung eines Probenkörpers.

Weitere vorteilhafte Ausgestaltungen werden anhand der folgenden Figuren erläutert.

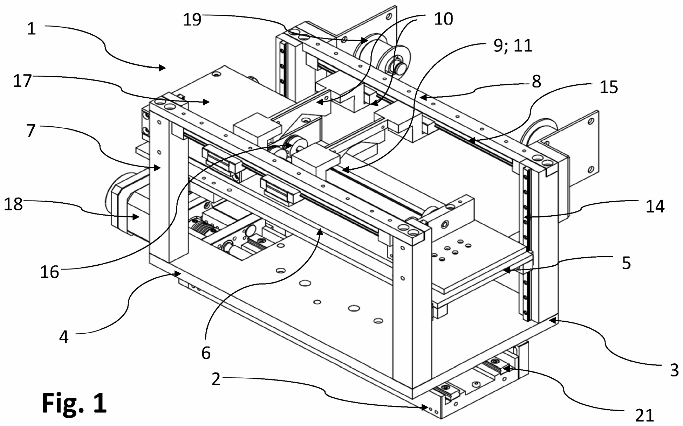

**Figur 1** zeigt eine Ausgestaltung einer erfindungsgemäßen, bevorzugten Vorrichtung **1** zur Aufnahme eines Probenkörpers. Die Vorrichtung **1** umfasst eine lineare Verschiebeeinheit **2** und eine auf der linearen Verschiebeeinheit **2** gelagerte Probenaufnahmeeinheit **3.** Die Probenaufnahmeeinheit **3** umfasst ferner eine Bodenplatte **4,** eine erste Trägerplatte **5,** eine zweite Trägerplatte **6,** vier Trägersäulen **7,** sowie zwei Querträger **8.** Die Bodenplatte **4** der Probenaufnahmeeinheit **3** ist rechteckig ausgestaltet. An den vier Ecken der rechteckig ausgestalteten Bodenplatte **4** sind insgesamt vier Trägersäulen **7** an den Ecken angeordnet. Weiterhin sind an den Trägersäulen **7** Führungsschienen **14** angeordnet, an denen die erste Trägerplatte **5** entlang der zweiten Achse aufwärts bzw. abwärts bewegbar angeordnet ist.

Dabei meint "abwärts" in Richtung der Bodenplatte **4** und "aufwärts" in Richtung der Querträger **8.**

Die Probenaufnahmeeinheit **3** ist auf der linearen Verschiebeeinheit **2** gelagert. Die lineare Verschiebeeinheit **2** weist Laufschienen **21** auf, auf welchen die Probenaufnahmeeinheit **3** entlang der ersten Achse auf der linearen Verschiebeeinheit **2** bewegbar ist. Die lineare Verschiebeeinheit **2** weist einen Motor **18** auf, über den die Probenaufnahmeeinheit **3** entlang der ersten Achse bewegt werden kann.

Die Probenaufnahmeeinheit **3** umfasst zwei Querträger **8,** die parallel zueinander angeordnet sind. Die Querträger **8** verbinden jeweils zwei Trägersäulen **7** miteinander. Die Querträger **7** und die Trägersäulen **8** sind orthogonal zueinander angeordnet. Die beiden Querträger **8** weisen jeweils eine Führungsbahn **15** auf, an denen zwei Haltebügel **10** angeordnet sind. Die Haltebügel **10** sind in dieser bevorzugten Ausgestaltung bewegbar entlang der an den Querträgern **8** angeordneten Führungsbahnen **15** angeordnet. Die Haltebügel **10** sind an den Führungsbahnen **15** der beiden Querträger **8** angeordnet.

Auf der zweiten Trägerplatte **6** ist eine Rotationseinheit **9** angeordnet. Die Rotationseinheit **9** umfasst zwei Rotationswellen **11,** die durch die Motoreinheit **17** im Uhrzeigersinn oder im Gegenuhrzeigersinn gedreht werden. Die Motoreinheit **17** ist in dieser Ausgestaltung ein Elektromotor. Zwischen der ersten Trägerplatte **5** und der zweiten Trägerplatte **6** ist ein Lager angeordnet (nicht gezeigt). Es ist erkennbar, dass die zweite Trägerplatte **6** nicht an den vier Trägersäulen 7 angeordnet ist bzw. diese nicht berührt. Durch das Lager, das zwischen der ersten Trägerplatte **5** und der zweiten Trägerplatte **6** angeordnet ist (nicht gezeigt), lässt sich die zweite Trägerplatte **6** entlang der dritten Achse bewegen. Dies bewirkt unter anderem, dass ein Probenkörper **12** (nicht gezeigt), welcher auf der Rotationseinheit **9** angeordnet wird, durch Bewegen der zweiten Trägerplatte **6** entlang der dritten Achse so positioniert werden kann, dass dieser zwischen den beiden Haltebügeln **10** angeordnet ist. Durch diese vorteilhafte Ausgestaltung ist es möglich, dass eine Lichtquelle, beispielsweise ein Laser, einen Probenkörper mit monochromatischem Licht bestrahlen kann, um die Schichtdicke des beschichteten Probenkörpers zu bestimmen. Dabei kann der Probenkörper in seiner gesamten Ausdehnung vermessen werden. Die Probenaufnahmeeinheit **3** kann entlang der ersten Achse auf der linearen Verschiebeeinheit **2** verschoben werden und dabei ein Probenkörper **12** von einer Lichtquelle gemessen werden. Anschließend kann die Rotationseinheit **9** bzw. können die beiden Rotationswellen **11** den Probenkörper **12** um einen bestimmten Wert im Uhrzeigersinn oder im Gegenuhrzeigersinn drehen, so dass die Lichtquelle erneut den Probenkörper **12** abtasten bzw. messen kann.

An zwei der Trägersäulen **7** sind Federrollen **19** angeordnet. Die beiden Federrollen **19** sind jeweils über ein Federband (nicht gezeigt) mit der ersten Trägerplatte **5** in Kontakt. Über das Federband und die Federrolle **19** lässt sich der Anpressdruck des Probenkörpers **12** gegen die Haltebügel **10** kontrollieren. Unter anderem kann dadurch verhindert werden, dass ein in der Rotationseinheit **9** befindlicher Probenkörper bei einer Bewegung entlang der zweiten Achse in Richtung der Haltebügel **10** beschädigt bzw. perforiert wird.

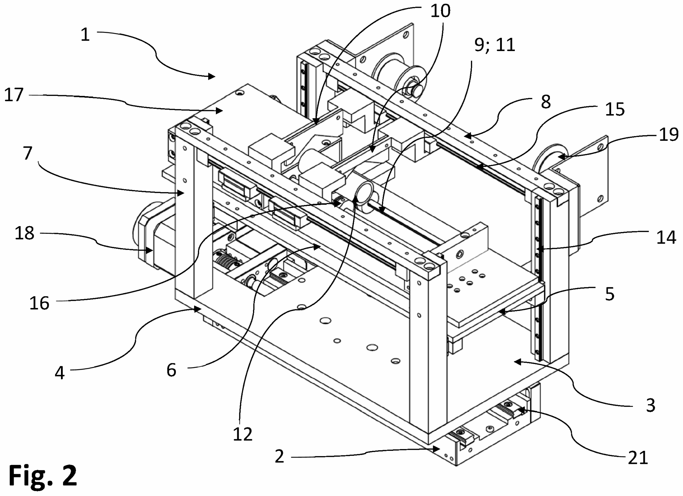

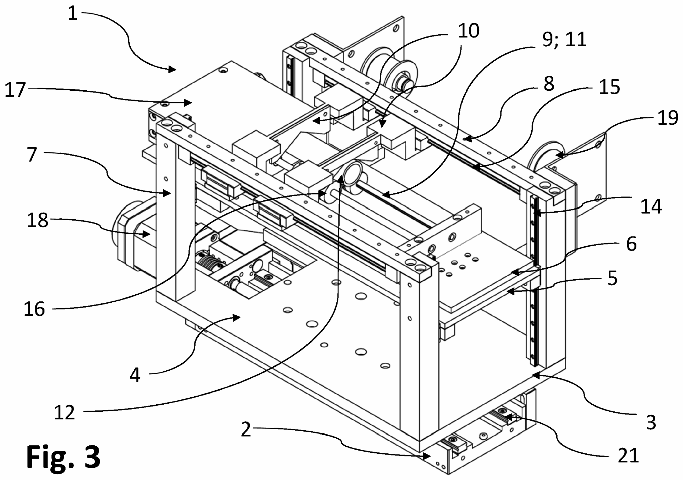

**Figur 2** **und** **Figur 3** zeigen die erfindungsgemäße Vorrichtung gemäß der Figur 1, mit der Maßgabe, dass ein Probenkörper **12** auf der Rotationseinheit **9** angeordnet ist. Dabei zeigt die Figur **2** einen Probenkörper auf der Rotationseinheit, wobei die Haltebügel und der Probenkörper noch nicht zentriert sind und die Figur **3** einen zentrierten Probenkörper, welcher auf der Rotationseinheit **9** angeordnet ist und von den Haltebügeln **10** fixiert wird. In dieser Ausgestaltung kann der Probenkörper von einer Lichtquelle bestrahlt werden um so die Schichtdicke des Probenkörpers zu bestimmen.

Auf den Rotationswellen **11** sind Auflagerollen **16** angeordnet. Diese Auflagerollen **16** sind entlang der ersten Achse auf den Rotationswellen verschiebbar angeordnet. Diese sorgen dafür, dass sich der Probenkörper **12** einfacher unter den Haltebügeln justieren bzw. positionieren lässt. Das Justieren bzw. Positionieren des Probenkörpers **12** geschieht insbesondere durch eine Verschiebung der zweiten Trägerplatte **6** entlang der dritten Achse, die Auflagerollen **16** und durch Verschieben der Haltebügel **10.**

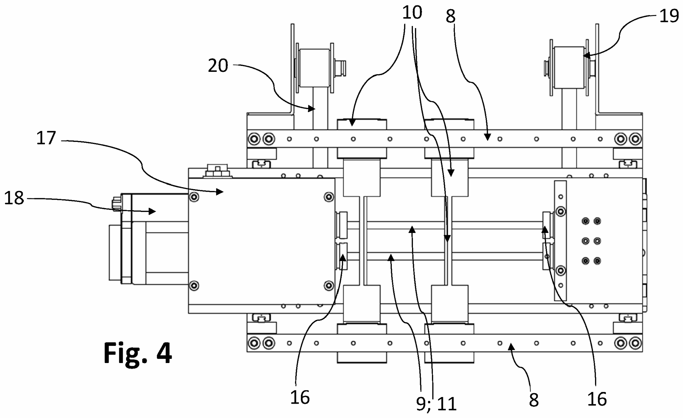

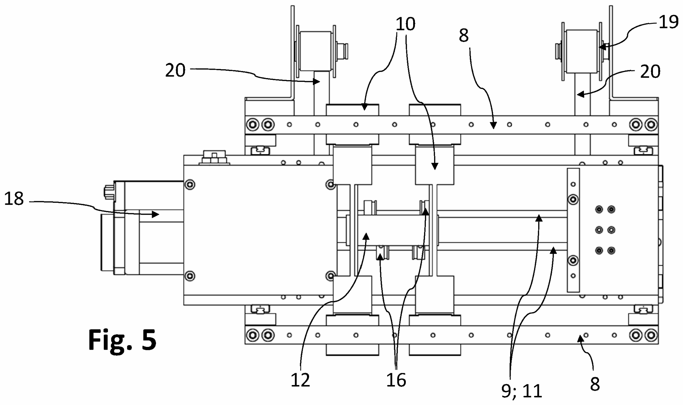

**Figur 4** und die **Figur 5** zeigen eine Draufsicht auf eine erfindungsgemäße Vorrichtung **1,** wobei die Figur 4 ohne einen Probenkörper **12** und die Figur 5 mit einem Probenkörper **12,** der auf der Rotationseinheit **9** aufliegt, dargestellt ist. Der Probenkörper **12** ist auf den Rotationswellen **11** der Rotationseinheit **9** angeordnet. In Figur 5 ist zu erkennen, dass der Probenkörper **12** auf insgesamt vier Auflagerollen **16** angeordnet ist. Es sind jeweils zwei Auflagerollen **16** auf einer Rotationswelle **11** angeordnet. Es ist zu erkennen, dass die Auflagerollen **16** entlang der Rotationswellen **11** verschiebbar sind. Der Probenkörper **12** wird von zwei Haltebügeln **10** auf der Rotationswelle **11** fixiert. Die Haltebügel **10** sind an zwei Querträgern **8** angeordnet. An zwei Trägersäulen **7** sind Federrollen **19** mit Federbändern **20** angeordnet. Die Federbänder **20** sind mit der ersten Trägerplatte **5** verbunden. Durch diese Anordnung lässt sich der Anpressdruck der ersten Trägerplatte **5** in Richtung der Haltebügel **10** kontrollieren. Dies verhindert eine Beschädigung des Probenkörpers bei der Justierung des Probenkörpers in der erfindungsgemäßen Vorrichtung.

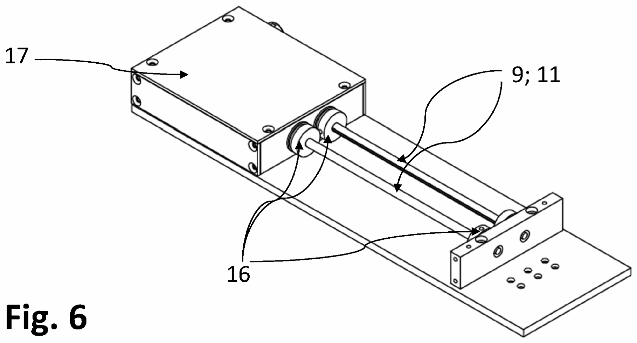

**Figur 6** zeigt eine Rotationseinheit **9** mit zwei Rotationswellen **11.** Die beiden Rotationswellen **11** werden über eine Motoreinheit **17** gesteuert und können so im Uhrzeigersinn oder im Gegenuhrzeigersinn gedreht werden. Auf den Rotationswellen **11** sind jeweils zwei Auflagerollen **16** angeordnet. Diese sind verschiebbar auf den Rotationswellen **11** angeordnet.

**Bezugszeichenliste:**

| | | | |
|---|---|---|---|
| 1: | Vorrichtung zur Aufnahme eines Probenkörpers | 11: | Rotationswelle |
| | | 12: | Probenkörper |
| 2: | lineare Verschiebeeinheit | 13: | Lager |
| 3: | Probenaufnahmeeinheit | 14: | Führungsschiene |
| 4: | Bodenplatte | 15: | Führungsbahn |
| 5: | erste Trägerplatte | 16: | Auflagerolle |
| 6: | zweite Trägerplatte | 17: | Motoreinheit |
| 7: | Trägersäule | 18: | Motor |
| 8: | Querträger | 19: | Federrolle |
| 9: | Rotationseinheit | 20: | Federband |
| 10: | Haltebügel | 21: | Führungsschiene |

## Patentansprüche

1. Vorrichtung zur Aufnahme eines Probenkörpers (1), zumindest aufweisend:
- eine lineare Verschiebeeinheit (2) mit einem ersten und einem gegenüberliegenden zweiten Ende, und
- eine Probenaufnahmeeinheit (3), wobei die Probenaufnahmeeinheit (3) zumindest umfasst:
- eine Bodenplatte (4),
- eine erste (5) und eine darauf gelagerte zweite Trägerplatte (6),
- eine Trägersäule (7),
- einen Querträger (8),
- eine Rotationseinheit (9),
- einen Haltebügel (10),
wobei die Probenaufnahmeeinheit (3) auf der linearen Verschiebeeinheit (2) gelagert ist,
wobei die Trägersäule (7) im Wesentlichen orthogonal auf der Bodenplatte (4) angeordnet ist,
wobei die erste Trägerplatte (5) an der Trägersäule (7) gelagert ist,
wobei der Querträger (8) an der Trägersäule (7) angeordnet ist,
wobei der Haltebügel (10) an dem Querträger (8) gelagert ist,
wobei die Rotationseinheit (9) auf der zweiten Trägerplatte (6) angeordnet ist,
wobei die Rotationseinheit (9) zumindest zwei Rotationswellen (11) umfasst,
wobei die Rotationseinheit (9) dazu eingerichtet ist, einen Probenkörper aufzunehmen (12),
wobei der Haltebügel (10) dazu eingerichtet ist, einen Probenkörper (12) zumindest teilweise auf der Rotationseinheit (9) zu fixieren,
wobei die Probenaufnahmeeinheit (3) auf der linearen Verschiebeeinheit (2) entlang einer ersten Achse verschiebbar gelagert ist,
wobei sich die erste Achse vom ersten Ende zum gegenüberliegenden zweiten Ende der linearen Verschiebeeinheit (2) erstreckt,
wobei die erste Trägerplatte (5) entlang einer zweiten Achse verschiebbar an der Trägersäule (7) gelagert ist,
wobei die zweite Achse orthogonal zur ersten Achse verläuft und sich von der Bodenplatte (4) in Richtung des Querträgers (8) erstreckt.

2. Vorrichtung nach Anspruch 1, wobei zwischen der ersten Trägerplatte (5) und der zweiten Trägerplatte (6) ein Lager, insbesondere ein Kugellager, angeordnet ist, und/oder wobei vorzugsweise die zweite Trägerplatte (6) entlang einer dritten Achse verschiebbar angeordnet ist, wobei sich die dritte Achse orthogonal zur ersten und orthogonal zur zweiten Achse erstreckt.

3. Vorrichtung nach einem der vorherigen Ansprüche, aufweisend zumindest vier Trägersäulen (7), vorzugsweise aufweisend zumindest zwei Querträger (8), wobei weiter vorzugsweise die zwei Querträger (8) zumindest teilweise parallel zueinander verlaufen, wobei noch weiter bevorzugt jeder Querträger (8) zwischen zwei Trägersäulen (7) angeordnet ist.

4. Vorrichtung nach einem der vorherigen Ansprüche, wobei eine oder mehrere der Trägersäulen (7) eine Führungsschiene (14) aufweisen, vorzugsweise alle Trägersäulen (7), und/oder wobei die erste Trägerplatte (5) an der Führungsschiene (14) angeordnet ist, und/oder wobei einer oder mehrere der Querträger (8) eine Führungsbahn (15) aufweisen, wobei vorzugsweise der Haltebügel (10) an der Führungsbahn (15) angeordnet ist.

5. Vorrichtung nach einem der vorherigen Ansprüche, aufweisend wenigstens zwei Haltebügel (10), wobei wenigstens ein Haltebügel (10), vorzugsweise alle Haltebügel (10), entlang der ersten Achse verschiebbar ist.

6. Vorrichtung nach einem der vorherigen Ansprüche, wobei auf jeder der zwei Rotationswellen (11) zumindest eine Auflagerolle (16) angeordnet ist, wobei bevorzugt die Auflagerolle (16) entlang der ersten Achse verschiebbar ist, wobei weiter bevorzugt auf jeder der zwei Rotationswellen (11) zumindest zwei Auflagerollen (16) angeordnet sind.

7. Vorrichtung nach einem der vorherigen Ansprüche, wobei die Rotationseinheit (9) eine Motoreinheit (17) umfasst, wobei die Motoreinheit (17) dazu ausgelegt ist, beide Rotationswellen (11) zu rotieren, wobei insbesondere beide Rotationswellen (11) im Uhrzeigersinn oder im Gegenuhrzeigersinn rotieren.

8. Vorrichtung nach einem der vorherigen Ansprüche, wobei die lineare Verschiebeeinheit (2) einen Motor (18) umfasst, wobei der Motor (18) dazu eingerichtet ist, die Probenaufnahmeeinheit (3) entlang der ersten Achse zu verschieben.

9. Vorrichtung nach einem der vorherigen Ansprüche, wobei die Probenaufnahmeeinheit (3) eine Federrolle (19) umfasst, insbesondere zwei Federrollen (19), wobei vorzugsweise jede Federrolle an einer Trägersäule (7) angeordnet ist, wobei vorzugsweise beide Trägersäulen (7) mit einem Querträger (8) verbunden sind, wobei weiter bevorzugt die Federrolle (19) über ein Federband (20) mit der ersten Trägerplatte (5) verbunden ist.

10. System umfassend eine Vorrichtung nach einem der Ansprüche 1 bis 9 sowie eine Lichtquelle, wobei die Lichtquelle ausgestaltet ist, die Dicke einer Schicht, insbesondere einer Silikonschicht, eines beschichteten Probenkörpers zu bestimmen.

11. System nach Anspruch 10, zusätzlich umfassend einen Probenkörper, wobei der Probenkörper vorzugsweise eine Spritze oder ein Vial ist.

12. Verwendung einer Vorrichtung nach einem der Ansprüche 1 bis 9 oder eines Systems nach einem der Ansprüche 10 oder 11, zur Schichtdickenmessung eines Probenkörpers.

## Claims

1. A device for holding a sample body (1), comprising at least:
- a linear displacement unit (2) having a first end and an opposite second end, and
- a sample-holding unit (3), wherein the sample-holding unit (3) comprises at least:
- a base plate (4),
- a first support plate (5) and a second support plate (6) mounted on the first support plate (5),
- a support column (7),
- a cross-beam (8),
- a rotation unit (9),
- a retaining bracket (10),
wherein the sample-holding unit (3) is mounted on the linear displacement unit (2),
wherein the support column (7) is arranged on the base plate (4) substantially orthogonally thereto,
wherein the first support plate (5) is mounted on the support column (7), wherein the cross-beam (8) is arranged on the support column (7),
wherein the retaining bracket (10) is mounted on the cross-beam (8),
wherein the rotation unit (9) is arranged on the second support plate (6),
wherein the rotation unit (9) comprises at least two rotation shafts (11),
wherein the rotation unit (9) is configured to receive a sample body (12),
wherein the retaining bracket (10) is configured to secure a sample body (12) at least partially on the rotation unit (9),
wherein the sample-holding unit (3) is mounted on the linear displacement unit (2) so as to be displaceable along a first axis,
wherein the first axis extends from the first end to the opposite second end of the linear displacement unit (2),
wherein the first support plate (5) is mounted on the support column (7) so as to be displaceable along a second axis,
wherein the second axis runs orthogonally to the first axis and extends from the base plate (4) towards the cross-beam (8).

2. The device according to claim 1, wherein a bearing, in particular a ball bearing, is arranged between the first support plate (5) and the second support plate (6), and/or wherein, preferably, the second support plate (6) is arranged so as to be displaceable along a third axis, wherein the third axis extends orthogonally to the first axis and orthogonally to the second axis.

3. The device according to any one of the preceding claims, comprising at least four support columns (7), preferably comprising at least two cross-beams (8), wherein, further preferably, the two cross-beams (8) run at least partially parallel to one another, wherein, even more preferably, each cross-beam (8) is arranged between two support columns (7).

4. The device according to any one of the preceding claims, wherein one or more of the support columns (7), preferably all support columns (7), comprise a guide rail (14), and/or wherein the first support plate (5) is arranged on the guide rail (14), and/or wherein one or more of the cross-beams (8) comprise a guide track (15), wherein, preferably, the retaining bracket (10) is arranged on the guide track (15).

5. The device according to any one of the preceding claims, comprising at least two retaining brackets (10), wherein at least one retaining bracket (10) is displaceable along the first axis, preferably all retaining brackets (10) being displaceable along the first axis.

6. The device according to any one of the preceding claims, wherein at least one support roller (16) is arranged on each of the two rotation shafts (11), wherein, preferably, the support roller (16) is displaceable along the first axis, wherein, further preferably, at least two support rollers (16) are arranged on each of the two rotation shafts (11).

7. The device according to any one of the preceding claims, wherein the rotation unit (9) comprises a motor unit (17), wherein the motor unit (17) is configured to rotate both rotation shafts (11), wherein, in particular, both rotation shafts (11) rotate clockwise or anticlockwise.

8. The device according to any one of the preceding claims, wherein the linear displacement unit (2) comprises a motor (18), wherein the motor (18) is configured to displace the sample-holding unit (3) along the first axis.

9. The device according to any one of the preceding claims, wherein the sample-holding unit (3) comprises a spring roller (19), in particular two spring rollers (19), wherein, preferably, each spring roller is arranged on a support column (7), wherein, preferably, both support columns (7) are connected to a cross-beam (8), wherein, further preferably, the spring roller (19) is connected to the first support plate (5) via a spring strip (20).

10. A system comprising a device according to any one of claims 1 to 9 and a light source, wherein the light source is configured to determine the thickness of a layer, in particular a silicone layer, of a coated sample body.

11. The system according to claim 10, further comprising a sample body, wherein the sample body is preferably a syringe or a vial.

12. Use of a device according to any one of claims 1 to 9 or of a system according to claim 10 or 11 for measuring the layer thickness of a sample body.

## Revendications

1. Dispositif pour la réception d'un corps d'échantillon (1), comprenant au moins :
- une unité de déplacement linéaire (2) avec une première et une seconde extrémité opposée, et
- une unité de réception d'échantillon (3), l'unité de reception d'échantillon (3) comprenant au moins :
- une plaque de base (4),
- une première (5) et, montée dessus, une seconde plaque de support (6),
- une colonne de support (7),
- une traverse (8),
- une unité de rotation (9),
- un étrier de maintien (10),
l'unité de réception d'échantillon (3) étant montée sur l'unité de déplacement linéaire (2),
la colonne de support (7) étant disposée de manière essentiellement orthogonale sur la plaque de base (4),
la première plaque de support (5) étant montée sur la colonne de support (7),
la traverse (8) étant disposée sur la colonne de support (7),
l'étrier de maintien (10) étant monté sur la traverse (8),
l'unité de rotation (9) étant disposée sur la seconde plaque de support (6),
l'unité de rotation (9) comprenant au moins deux arbres de rotation (11),
l'unité de rotation (9) étant agencée pour recevoir un corps d'échantillon (12),
l'étrier de maintien (10) étant agencé pour fixer un corps d'échantillon (12) au moins partiellement sur l'unité de rotation (9),
l'unité de réception d'échantillon (3) étant montée déplaçable sur l'unité de déplacement linéaire (2)
le long d'un premier axe, le premier axe s'étendant de la première extrémité à la seconde extrémité opposée de l'unité de déplacement linéaire (2),
la première plaque de support (5) étant montée déplaçable le long d'un second axe sur la colonne de support (7),
le second axe étant orthogonal au premier axe et s'étendant de la plaque de base (4) en direction de la traverse (8).

2. Dispositif selon la revendication 1, un palier, en particulier un roulement à billes, étant disposé entre la première plaque de support (5) et la seconde plaque de support (6), et/ou la seconde plaque de support (6) étant de préférence disposée déplaçable le long d'un troisième axe, le troisième axe s'étendant orthogonalement au premier et orthogonalement au second axe.

3. Dispositif selon l'une des revendications précédentes, comprenant au moins quatre colonnes de support (7), de préférence comprenant au moins deux traverses (8), les deux traverses (8) s'étendant de préférence au moins partiellement parallèlement l'une à l'autre, chaque traverse (8) étant encore plus préférentiellement disposée entre deux colonnes de support (7).

4. Dispositif selon l'une des revendications précédentes, une ou plusieurs des colonnes de support (7) présentant un rail de guidage (14), de préférence toutes les colonnes de support (7), et/ou la première plaque de support (5) étant disposée sur le rail de guidage (14), et/ou un ou plusieurs des traverses (8) présentant un chemin de guidage (15), de préférence l'étrier de maintien (10) étant disposé sur le chemin de guidage (15).

5. Dispositif selon l'une des revendications précédentes, comprenant au moins deux étriers de maintien (10), au moins un étrier de maintien (10), de préférence tous les étriers de maintien (10), étant déplaçable le long du premier axe.

6. Dispositif selon l'une des revendications précédentes, au moins un rouleau d'appui (16) étant disposé sur chacun des deux arbres de rotation (11), le rouleau d'appui (16) étant de préférence déplaçable le long du premier axe, au moins deux rouleaux d'appui (16) étant encore plus préférentiellement disposés sur chacun des deux arbres de rotation (11).

7. Dispositif selon l'une des revendications précédentes, l'unité de rotation (9) comprenant une unité moteur (17), l'unité moteur (17) étant conçue pour faire tourner les deux arbres de rotation (11), en particulier les deux arbres de rotation (11) tournant dans le sens horaire ou antihoraire.

8. Dispositif selon l'une des revendications précédentes, l'unité de déplacement linéaire (2) comprenant un moteur (18), le moteur (18) étant agencé pour déplacer l'unité de réception d'échantillon (3) le long du premier axe.

9. Dispositif selon l'une des revendications précédentes, l'unité de réception d'échantillon (3) comprenant un rouleau à ressort (19), en particulier deux rouleaux à ressort (19), de préférence chaque rouleau à ressort étant disposé sur une colonne de support (7), de préférence les deux colonnes de support (7) étant reliées à une traverse (8), le rouleau à ressort (19) étant encore plus préférentiellement relié à la première plaque de support (5) par une bande à ressort (20).

10. Système comprenant un dispositif selon l'une des revendications 1 à 9 ainsi qu'une source lumineuse, la source lumineuse étant conçue pour déterminer l'épaisseur d'une couche, en particulier d'une couche de silicone, d'un corps d'échantillon revêtu.

11. Système selon la revendication 10, comprenant en outre un corps d'échantillon, le corps d'échantillon étant de préférence une seringue ou un flacon.

12. Utilisation d'un dispositif selon l'une des revendications 1 à 9 ou d'un système selon l'une des revendications 10 ou 11, pour la mesure d'épaisseur de couche d'un corps d'échantillon.
